**Europäisches Patentamt**

**European Patent Office**

**Office européen des brevets**

(11) Veröffentlichungsnummer: **0 097 933**
**B1**

(12) **EUROPÄISCHE PATENTSCHRIFT**

(45) Veröffentlichungstag der Patentschrift:
16.08.89

(51) Int. Cl.⁴: **A 01 C 17/00**

(21) Anmeldenummer: **83106197.3**

(22) Anmeldetag: **24.06.83**

(54) Vorrichtung zum Ausstreuen von körnigem und/oder pulverigem Gut, insbesondere Kunstdünger oder Saatgut.

(30) Priorität: **25.06.82 DE 3223764**

(43) Veröffentlichungstag der Anmeldung:
**11.01.84 Patentblatt 84/2**

(45) Bekanntmachung des Hinweises auf die Patenterteilung:
**16.08.89 Patentblatt 89/33**

(84) Benannte Vertragsstaaten:
**DE FR GB IT NL**

(56) Entgegenhaltungen:
**DE-A- 2 031 557**
**DE-A- 2 041 804**
**DE-A- 2 421 094**
**DE-A- 2 841 620**
**DE-B- 2 805 879**
**DE-C- 2 931 934**
**FR-A- 2 382 172**
**US-A- 2 343 303**
**US-A- 2 594 084**

**Prospekt der Firma Rauch Landmaschinenfabrik, 1982**

(73) Patentinhaber: **ACCORD Landmaschinen Heinrich Weiste & Co. GmbH, Coesterweg 42, D-4770 Soest (DE)**

(72) Erfinder: **Wiegelmann, Hubert, Rochusstrasse 13, D-4796 Salzkotten-Tudorf (DE)**

(74) Vertreter: **Habbel, Hans-Georg, Dipl.-Ing., Postfach 3429 Am Kanonengraben 11, D-4400 Münster (DE)**

## Beschreibung

Die Erfindung bezieht sich auf eine Vorrichtung gemäß dem Oberbegriff des Hauptanspruches.

Eine gattungsbildende Einrichtung wird in der CH-A-364 381 beschrieben. Bei dieser bekannten Vorrichtung treten Schwierigkeiten wegen der zwangweisen Höhenverstellung auf, die mit der Verstellung des Winkels in Fahrtrichtung verbunden ist. Eine andere Einrichtung wird in der FR-A-23 82 172 beschrieben. Bei dieser bekannten Einrichtung handelt es sich um einen Anhängerstreuer, wobei der Anhänger selbst mit einer Austragsvorrichtung für das Streugut ausgerüstet ist, das über eine Schurre unmittelbar oberhalb der Streuscheiben mündet. Die Streuscheiben sind zwar heb- und senkbar auf einem Tragrahmen gelagert, aber diese Bewegung erfolgt in Form einer Schwenkbewegung um eine quer zur Fahrtrichtung ausgerichtete Achse. Eine Hubbewegung aus der normalen Arbeitsstellung ist nicht möglich, sondern es ist nur eine Absenkbewegung möglich, wobei durch die Schwenkbewegung eine Veränderung der Neigung der Streuscheiben erfolgt. Hierdurch erfolgt auch eine Veränderung des Streubildes.

Die bekannte Einrichtung ist nur für eine Frühdüngung geeignet, da bei einer Spätdüngung, wenn die Pflanzen bereits eine gewisse Höhe erreicht haben, ein Überfahren dieser Pflanzen mit dem Streuaggregat nicht mehr möglich ist. Die bekannte Einrichtung ist daher nicht universell für alle Düngeaufgaben einsetzbar.

Aus der DE-A-28 41 620 ist eine Anbauvorrichtung für einen Zentrifugalstreuer bekannt. Dieser Düngerstreuer arbeitet nur mit einer Streuscheibe und die Streuscheibe ist horizontal ausgerichtet, d. h. nicht geneigt. Die Streuscheibe ist dabei in einem Tragrahmen gelagert, der auch den Vorratsbehälter trägt. Um diesen Düngerstreuer in unterschiedlichen Hublagen einzusetzen, so daß eine Düngung von der Frühdüngung bis zur Spätdüngung möglich ist, kann der Tragrahmen unter Zwischenschaltung eines Hebelgestänges in die Dreipunkthydraulik eingehängt werden. Mit diesem Zusatzgestänge ist zwar theoretisch möglich, die Schleuderscheibe in die erforderliche Höhe von 80 bis 100 cm über die Pflanzenspitzen anzuheben, denn nur in dieser Hochlage kann bei einer ebenen Schleuderscheibe eine ausreichende Wurfweite erzielt werden, aber die Hubkraft wird im Verhältnis zur Hubhöhe verkleinert, so daß nicht die ausreichenden Düngermengen transportiert und angehoben werden können.

Bei dieser bekannten Ausführungsform ist für eine wirtschaftliche Streubreite der große Abstand der Streuscheibe von der zu bestreuenden Fläche während des Streuvorganges notwendig, was aber zwangsläufig bei der bekannten Einrichtung zu einer höheren Schwerpunktlage des Streuers am Schlepper und somit zu größerer Kippgefahr im hängigen Gelände führt. Das Einhalten des konstanten senkrechten Abstandes von der zu bestreuenden Fläche, d. h. also etwa 50 bis 100 cm oberhalb der zu bestreuenden Fläche oder den Pflanzenspitzen, macht wegen der oft unterschiedlichen Bodenverhältnisse Schwierigkeiten und ein sich ändernder Abstand führt zur Veränderung der effektiven Streubreite und somit zur Unter- und Überdüngung.

Durch den Einbau des Zwischengestänges gelangt der Streuer in seiner mittleren Höhenlage so weit vom Schlepper nach hinten, daß dadurch die Manövrierfähigkeit des Schleppers erheblich eingeschränkt wird.

Der Erfindung liegt die Aufgabe zugrunde, die gattungsbildende Einrichtung so zu verbessern, daß mit ihr von der Frühdüngung bis zur Spätdüngung alle Düngeaufgaben erfüllbar sind, wobei der Abstand der Schleuderscheiben möglichst unmittelbar über dem Erdboden oder den vorhandenen Pflanzenspitzen liegen soll und wobei weiterhin die Schwerpunktverteilung zwischen Düngerstreuer und Zugfahrzeug sich unabhängig von der Höhenlage des Düngerstreuers nicht wesentlich ändert.

Diese der Erfindung zugrundeliegende Aufgabe wird durch die Merkmale des kennzeichnenden Teiles des Hauptanspruches gelöst.

Durch die erfindungsgemäße Anordnung wird erreicht, daß ohne Veränderung an den Streutellern lediglich durch einfaches vertikales Anheben stets das gleiche Streubild und die gleiche Streubreite erreichbar sind, d. h. stets die gleiche Streuqualität erzielbar ist. Diese bis zur Spätdüngung gleichbleibende Streuqualität kann ohne Beschädigung der Pflanzen erzielt werden und ist erreichbar bei einer Stellung der Streuscheiben, die sich in unmittelbarer Nähe der obersten Pflanzenspitzen befinden. Windeinwirkungen und Beeinflussungen durch den Fahrtwind sind daher nicht zu befürchten.

Vorteilhafte Ausgestaltungen sind in den Unteransprüchen erläutert.

Ein Ausführungsbeispiel der Erfindung wird nachfolgend anhand der Zeichnungen erläutert. Die Zeichnungen zeigen dabei in

Fig. 1 eine perspektivische Ansicht auf eine Streuvorrichtung mit Tragrahmen und Vorratsbehälter, in

Fig. 2 und 3 Einzeldarstellungen der Streuscheiben, in

Fig. 4 eine schematische Darstellung der Vorrichtung in Ansicht von hinten in verkleinertem Maßstab und in den

Fig. 5 und 6 eine schematische Darstellung der Schleuderscheiben und der Winkel und Ebenen.

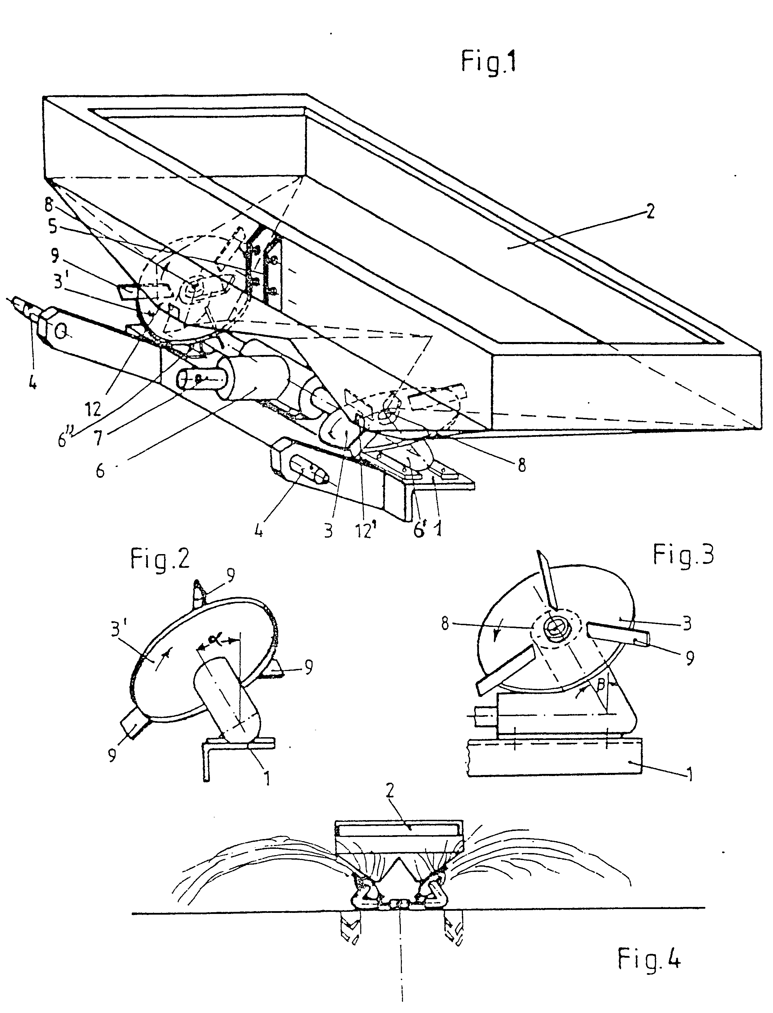

Bei der Vorrichtung gemäß Fig. 1 gelangt ein Rahmen 1 zur Anwendung, der den Vorratsbehälter 2 für das Streugut trägt und auf dem zwei Streuscheiben 3, 3' gelagert sind. Im Boden des Vorratsbehälters 2 sind über den beiden Scheiben 3, 3' Auslässe 12, 12' für das Streugut vorgesehen. Die Schleuderscheiben 3, 3' sind auf ihrer Oberfläche im wesentlichen eben und lediglich mit radial nach außen gerichteten Leitflächen 9 für das Streugut versehen.

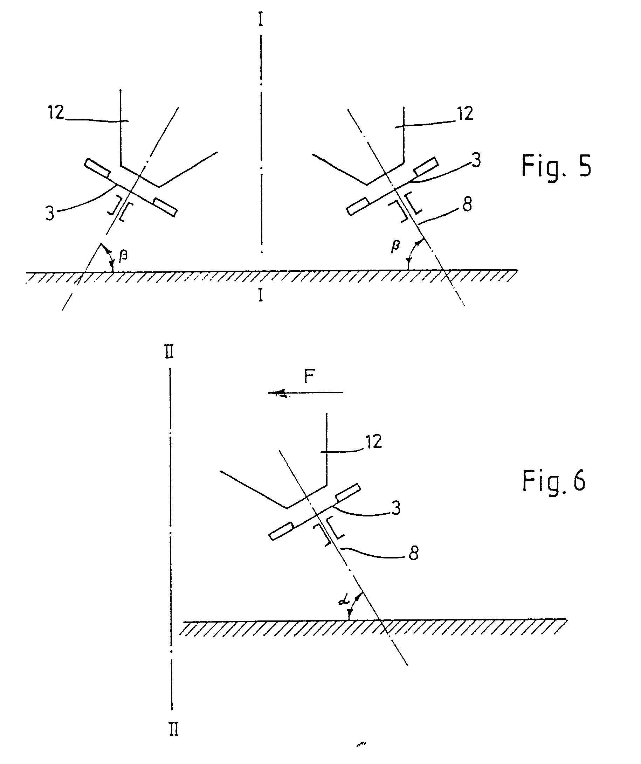

Auf der dem Schlepper zugekehrten Seite ist der Rahmen 1 mit Anschlüssen 4 und 5 zum Anbau an eine an sich bekannte Dreipunktaufhängung eines Schleppers versehen. Der Antrieb der beiden Schleuderscheiben erfolgt über die auf dem Rahmen 1 vorgesehenen Winkelgetriebe 6, 6', 6'', wobei das Winkelgetriebe 6 den Zapfwellenanschluß 7 aufweist. Die die Schleuderscheiben 3, 3' tragenden Wellen 8 sind, wie es auch in Fig. 5 schematisch dargestellt ist, gegenüber der Streuebene geneigt und mit Hilfe eines nicht weiter dargestellten Einstelltriebes in der Neigung veränderbar.

Gemäß Fig. 5 und 6 sind beide Schleuderscheiben gegenüber der vertikalen Längsmittelebene I–I des Fahrzeuges im Winkel β geneigt und außerdem in Fahrtrichtung F zu einer durch die Dreipunktaufhängung gelagerte Vertikalebene II–II um den Winkel α. Mit einem nicht weiter dargestellten Stelltrieb lassen sich beide Winkel verändern und damit die Stellung der beiden Schleuderscheiben den gewünschten Streuverhältnissen anpassen.

**Patentansprüche**

1. Vorrichtung zum Ausstreuen von körnigem und/oder pulverigem Gut, insbesondere Kunstdünger oder Saatgut, mit zwei auf einem mit einem Vorratsbehälter (2) starr verbundenen Tragrahmen (1) im Abstand quer zur Fahrtrichtung nebeneinander, jeweils unter dem Streugutauslaß (12, 12') des Vorratsbehälters (2) angeordneten, umlaufend antreibbaren Schleuderscheiben (3, 3'), die in Fahrtrichtung (F) um einen Winkel α geneigt sind, wobei der Tragrahmen (1) mit den Schleuderscheiben (3, 3') und dem Vorratsbehälter (2) in die Dreipunktaufhängung eines Krafthebers eines Zugfahrzeuges einhängbar und heb- und senkbar ist, und wobei die Achse der Schleuderscheiben (3, 3') symmetrisch zu einer in Fahrtrichtung verlaufenden Mittelebene (I–I) angeordnet sind, dadurch gekennzeichnet, daß die Achsen (8) der Schleuderscheiben (3, 3') nach oben in Richtung der Mittelebene (I–I) um einen Winkel β konvergierend geneigt sind.

2. Vorrichtung nach Anspruch 1, dadurch gekennzeichnet, daß die Achsen (8) der Schleuderscheiben (3, 3') in ihren beiden Neigungen einstellbar sind.

**Claims**

1. A device for scattering granular and/or powdery matter, especially artificial fertilizers or seed material, comprising two rotatably drivable rotary disks (3, 3') arranged on a carrying frame (1) rigidly connected to a storage hopper (2) at a distance from each other and perpendicular to the direction of travel and under the respective scatter material outlet (12, 12') of the storage hopper (2), which disks (3, 3') are inclined in the direction of travel (F) at an angle α, the carrying frame (1) being suspendable and lift- and lowerable in the three-point suspension of a power lift of a towing vehicle and the axes of the scattering disks (3, 3') being arranged to be symmetrical with respect to a central plane (I–I) running in the direction of travel, characterized in that the axes (8) of the scattering disks (3, 3') are inclined towards each other and upwardly in the direction of the central plane (I–I) at an angle β.

2. A device according to claim 1, characterized in that both the angles of inclination of the axes (8) of the scattering disks (3, 3') are adjustable.

**Revendications**

1. Dispositif pour l'épandage de produits granuleux et/ou pulvérulents, en particulier d'engrais chimiques ou de semences, avec deux disques centrifuges (3, 3') disposés côté à côté, à une certaine distance, transversalement à la direction de marche sur un cadre porteur (1) relié de manière rigide à un réservoir d'alimentation (2), situés respectivement en-dessous d'une sortie (12, 12') de produit à disperser à partir du réservoir d'alimentation (2), qui sont susceptibles d'être entraînés en rotation et sont inclinés d'un angle α par rapport à la direction de marche, sur lequel le cadre porteur (1) peut être accroché à la suspension à trois points d'un releveur hydraulique d'un véhicule tracteur, en même temps qu'être levé et abaissé et sur lequel les axes (8) des disques centrifuges sont disposés symétriquement par rapport à un plan médian (I–I) s'étendant suivant la direction de marche, caractérisé en ce que les axes (8) des disques centrifuges (3, 3') sont inclinés en convergeant vers le haut en direction du plan médian (I–I) d'un angle β.

2. Dispositif selon la revendication 1, caractérisé en ce que les inclinaisons des deux axes (8) des disques centrifuges (3, 3') sont réglables.

Fig.1

Fig.2

Fig.3

Fig.4

Fig. 5

Fig. 6